Europäisches Patentamt

European Patent Office

Office européen des brevets

(19)

(11) Publication number: **0 200 471**

A2

(12) **EUROPEAN PATENT APPLICATION**

(21) Application number: **86303071.4**

(22) Date of filing: **23.04.86**

(51) Int. Cl.⁴: **C 04 B 28/04**
//(C04B28/04, 22:06, 24:02,
24:12, 24:12, 24:38, 24:42)

(30) Priority: **24.04.85 US 726536**
**26.04.85 US 727657**

(43) Date of publication of application:
**05.11.86 Bulletin 86/45**

(84) Designated Contracting States:
**BE CH DE FR GB IT LI NL SE**

(71) Applicant: **THE DOW CHEMICAL COMPANY**
**2030 Dow Center Abbott Road P.O. Box 1967**
**Midland, MI 48640(US)**

(72) Inventor: **Bell, David A.**
**202 Helen Street**
**Midland Michigan 48640(US)**

(72) Inventor: **Grenley, Dallas G.**
**2711 Georgetown Drive**
**Midland Michigan 48640(US)**

(74) Representative: **Raynor, John et al,**
**W.H. Beck, Greener & Co 7 Stone Buildings Lincoln's Inn**
**London WC2A 3SZ(GB)**

(54) **Process for preparing concrete mixtures and a liquid admixture therefor.**

(57) An aqueous admixture composition having a water-reducing agent, a water-soluble polymer composition, and water which is suitable for extending the time of effective fluidity of concrete mixtures is described. Also the process for preparing concrete mixtures having a cementitious binding agent, aggregate compositions, water-reducing agent and water is improved by incorporating a water-soluble polymer composition in the solids mixture of the binding agent and aggregate compositions. Concrete mixtures prepared thereby also exhibit extended time of fluidity compared to concrete mixtures prepared without the incorporation of the water-soluble polymer composition.

EP 0 200 471 A2

## PROCESS FOR PREPARING CONCRETE MIXTURES
## AND A LIQUID ADMIXTURE THEREFOR

This invention concerns the preparation of concrete mixtures. Included within this invention are dry blend concrete mixtures and liquid admixtures.

Common concrete mixtures are mixtures of aggregate compositions, a cementitious binding agent and water. Such mixtures are employed in construction applications requiring high strength materials, such as in preparing walls, floors, ceilings, and support columns and beams.

The strength of the concrete mixture is related to the amount of water employed in its preparation. Typically, stronger concrete can be provided by employing less water in the mixture. However, there are functional limitations to the minimum amount of water which is required. For example, the concrete mixture can become too stiff to be effectively employed in its intended applications.

To provide high strength concrete mixtures with low water content, but which can still be effectively applied, certain compositions can be added to the mixtures. For example, water-reducing agents can enable concrete mixtures to employ less water, while achieving initial fluidity. An example of such agents is sulfonated naphthalene formaldehyde condensates. However, such agents only aid the fluidity for a short period of time, and the concrete mixture stiffens rapidly after that period. Other water-reducing compositions, for example the lignosulfonates, and hydroxycarboxylic acid, enable the concrete to employ less water and achieve fluidity, but such compositions also extend the time required for the concrete mixtures to set. By delaying the setting time of the concrete, the time required to achieve performance strength is unacceptably long.

Some of the teachings available with respect to concrete disclose pumpable compositions having a dispersing agent and a gelling agent (U.S. Patent 4,131,480) or having cellulose ethers or polyvinyl alcohol or polyacrylic amide (U.S. Patent 4,069,062), miscibility aids having methylcellulose water, and a chelating metallic compound (Japanese Patent Kokai No. 1977-90528), molding sand mixtures having a rapid harding cement, a polymer water molding agent, a polymer water-reducing agent, and optional components (U.S. Patent 4,131,474), and additives having gelling agents such as water soluble cellulose ethers, dispersing agents such as naphthalene/formaldehyde, and antifoam agents such as silicone (U.S. Patent 4,265,674).

In view of the disadvantages of known methods, it is desirable to provide concrete mixtures and a process for preparing them which have a low water content, but which can be effectively applied over an extended period of time, and which are efficiently and effectively prepared.

In one embodiment this invention is an improvement in a process of preparing a concrete mixture by providing a solids mixture having major amounts of a coarse aggregate composition and a fine aggregate composition, and a cementitious binding agent and then contacting said mixture with a water-reducing agent and water, the improvement comprising incorporating a functionally effective amount of a water-soluble polymer composition into the solids mixture whereby the resulting concrete mixture has an extended time of effective fluidity over a concrete mixture of the same composition prepared without the incorporation of the water-soluble polymer.

In a further embodiment this invention is an aqueous admixture composition suitable for preparing effectively fluid concrete mixtures, the admixture composition comprising (a) a water-reducing agent, (b) a water-soluble polymer composition, and (c) water.

Furthermore, the aqueous admixture composition of this invention provides the skilled artisan with a process for manufacturing concrete mixtures which have an extended time of effective fluidity over concrete mixtures of the same composition but which do not employ the water-soluble polymer composition of the aqueous admixture composition. The process comprises providing a solids mixture of a cementitious binding agent, a fine aggregate and a coarse aggregate, and contacting the solids mixture with a functionally effective amount of the aqueous admixture composition of this invention, and optionally, additional water to obtain an effectively fluid concrete mixture.

Surprisingly, the invention provides concrete mixtures and processes for preparing them which have a low water content, but which can be effectively applied over an extended period of time and which one effectively and efficiently prepares. Concrete mixtures prepared via the processes of this invention can be employed in applications in which conventionally prepared concrete mixtures are employed. Such applications include, for example, the preparation of high strength walls, floors, ceilings, and support columns and beams.

The cementitious binding agent employed in preparing the dry blend concrete mixtures of this invention are those agents which can exhibit binding and adhesive properties upon contact with water. Such agents can be, for example, any of the portland cements. A functionally effective amount of the cementitious binding agent can be any amount which is sufficient to bind all of the other components of the concrete mixture together. As used herein, all amounts of the concrete components are based on weight parts of cementitious binding agent.

Aggregate compositions comprise the major component of the concrete. Typically, more than one type of aggregate material is employed in preparing concrete compositions. One aggregate can be a fine aggregate which functions to impart volume to the concrete, and imparts some element of strength. Such fine aggregates can be comprised of fine particles. These particles impart volume by residing between the particles of cementitious binding agent and the other components of the concrete. An example of a suitable fine aggregate is sand which is acceptable under ASTM C-33. A major amount of fine aggregate is employed in the concrete mixture. A major amount is an amount which is greater than the amount of cementitious binding agent. Such amount can vary and typically ranges from about 1.75 to about 3 parts, preferably about 2 parts based on weight of cementitious binding agent, although any amount which can provide the desired volume and can be bound by the amount of binding agent is sufficient.

A second aggregate composition can be included to impart the desired physical properties, such as strength, physical appearance, electro-conductivity and the like, to the concrete. Such an aggregate composition is comprised of a major amount of particles which are larger than the particles comprising the fine aggregate. Such particles can be about one quarter inch (0.6 cm) in diameter or larger, depending on the application. As in the fine aggregate, a major amount of such a coarse aggregate is employed. Such an amount can vary and typically ranges from about 1.75 to about 3, preferably about 2 parts based on weight of the cementitious binding agent, although any amount which can impart the desired strength, and be bound by the amount of binding agent is sufficient.

An amount of water is employed in preparing the concrete mixture which is sufficient to activate the amount of binding agent and to provide an effective fluidity. Such an amount can vary and typically ranges from about 0.3 to about 0.7, preferably from about 0.4 to about 0.5 parts based on weight of the binding agent, although any amount which can perform the functions is sufficient. It is desirable to employ the minimum amount of water necessary to perform the functions.

The aqueous admixture composition of this invention is comprised of specialized components which perform certain functions in concrete mixtures which employ the aqueous admixture. Therefore, unless otherwise stated, as used herein the functionally effective amounts of the components of the aqueous admixture refer to their respective functions in a concrete mixture, and not to a function in the aqueous admixture itself.

The water-reducing agents employed in preparing the concrete mixtures of this invention are those polymer compositions which are known to maintain the fluid properties of the concrete mixture at a lower amount of water compared to the fluid properties of a concrete mixture which does not contain such agents. Such agents are believed to aid in dispersing the cementitious binding agent throughout the filler and aggregate materials. Therefore, less water is required to provide a concrete mixture which is effectively fluid. Examples, of such water-reducing agents, also known as plasticizers and superplasticizers, are sulfonated naphthalene formaldehyde condensate, sulfonated melamine formaldehyde condensate, the lignosulfonates, hydroxycarboxylic acid, and the like. The preferred water-reducing agents are the sulfonated melamine and naphthalene formaldehyde condensates because of their superior water-reducing capacities. Such water-reducing agents are available and prepared by known methods. Typically, water-reducing agents can reduce the amount of water required to provide an effectively fluid concrete mixture by at least about 5 percent, preferably at least about 12 percent, and most preferably at least about 20 percent based on the amount of water required to provide a similar degree of fluidity in a concrete mixture which does not contain the agents. The water-reducing agents are available and prepared by known methods.

The amount of such water-reducing agents employed in the liquid admixture can vary and typically ranges from about 20 to about 60 weight percent, preferably from about 35 to about 55 weight percent based on total weight of aqueous admixture, although any functionally effective amount which can provide the effective degree of fluidity to concrete mixtures containing an amount of the admixture is sufficient.

A minor amount of the water-reducing agent is employed in the dry blend concrete mixtures. A minor amount is an amount substantially less than the amount of cementitious binding agent employed. Such an amount can vary, and typically ranges from about 0.3 to about 3 percent, preferably about 1 percent based on weight of cementitious binding agent, although any amount which can provide the effective degree of fluidity is sufficient.

The water-soluble polymer compositions of this invention are those water-soluble polymers which are known to inhibit the agglomeration of certain particles suspended in aqueous systems. It is believed that such polymers function at the cement/water interface. It is observed that when a functionally effective amount of such a polymer composition is employed, concrete mixtures exhibit an effective fluidity over an extended time period. It is also observed that although the effective fluidity is extended, such polymers do not detract from the set-time, nor the effective strength of the hardened concrete. Such concrete mixtures exhibit comparable compressive strengths to concrete mixtures prepared without water-reducers and/or polymers.

Examples of such polymers are the water-soluble cellulose ethers, water-soluble natural or synthetic gums, the alginates, polyvinyl alcohol, polyvinyl acetate, the polyacrylamides, and others. Preferably, a water-soluble cellulose ether is employed. Most preferably, a hydroxypropyl methylcellulose is employed. Such polymers are prepared by known methods. For example, the cellulose ethers are typically prepared by reacting alkali cellulose with functionally effective amounts of the desired etherifying agents; for example, an alkyl halide, and alkylene oxide to provide a hydroxyalkyl alkylcellulose. Such a process is disclosed in, for example, U.S. Patent 4,477,657.

A functionally effective amount of the water-soluble polymer is employed. Such amount is sufficient to extend the effective fluidity of the concrete mixture over a period of time. Such polymers are known to thicken aqueous systems, so the upper limit on the amount employed is that amount which so thickens the concrete mixture that its effective fluidity is destroyed.

As in the water-reducing agent, a minor amount of the water-soluble polymer is employed in the dry blend concrete mixture. Such amount can vary and typically ranges from about 0.01 to about 0.1 percent, preferably from about 0.015 to about 0.02 percent based on weight of cementitious binding agent, although any amount which is sufficient to extend the effective fluidity can be employed.

A functionally effective amount of the water-soluble polymer is employed in conjunction with the water-reducing agent in the liquid admixture concrete. Such amount is sufficient to extend the time of effective fluidity of the concrete mixture. Such polymers are known to thicken aqueous systems, so the upper limit on the amount employed is that amount which so thickens the aqueous admixture that it cannot be effectively provided to a concrete mixture or the concrete mixture itself is unworkably thick. The amount can vary, and typically ranges from about 0.1 to about 0.7 weight percent, preferably from about 0.15 to about 0.5 weight percent based on total weight of aqueous admixture, although any amount which is sufficient to extend the time of effective fluidity of a concrete mixture can be employed.

Optionally, the water-soluble cellulose ether can be crosslinked with an amount of a crosslinking agent sufficient to render the cellulose ether temporarily and reversibly insoluble in water. Suitable crosslinking agents are, for example, the aldehydes or dialdehydes, with glyoxal being preferred for hydroxypropyl methylcellulose. Such crosslinking agents aid the dispersibility of the cellulose ether in water. The effects of the crosslinking agent can be reversed by adding an amount of a hydroxide composition, such as, for example, ammonium hydroxide. Typically, a trace amount of the hydroxide is sufficient to reverse the crosslinking effect. Suitable crosslinking methods are disclosed in, for example, U.S. Patents 3,489,719; 4,321,367 and 4,373,959.

An amount of water is employed in the liquid admixture embodiment of this invention to provide an effective liquid mixture of the functional components. Preferably, such amount is sufficient to form a solution with the water-soluble polymer composition to facilitate mixing with the other components of the aqueous admixture. The amount can vary, and typically ranges from about 40 to about 80 weight percent of the total weight of the admixture, although any amount sufficient to provide an effective liquid mixture can be employed. It is preferred that distilled water be employed so that interaction with the components of the admixture is avoided.

Other compositions can be added to the aqueous admixture to perform other desirable functions. For example, during agitation to prepare the concrete mixture, an excessive degree of foaming can occur. Such foaming can introduce an excessive amount of air into the concrete mixture, which can detract from the strength of the hardened concrete. It can therefore be desirable to add an anti-foaming agent to the aqueous admixture.

Suitable anti-foaming agents are those polymer compositions known to inhibit the formation of bubbles in a liquid during its agitation by reducing its surface tension. Examples are the organic phosphates, polysiloxanes, acetylenic diols, polyglycols and alcohols. The amount of the anti-foaming agent can vary and typically ranges from about 0.1 to about 5 weight percent, preferably from about 0.1 to about 4 weight percent of the total weight of the aqueous mixture, although any functionally effective amount sufficient to inhibit the amount of bubbles which can form during agitation of the concrete mixture can be employed. Such agents are readily commercially available.

In view of the fact that the water-soluble polymer compositions, especially the cellulose ethers can thicken aqueous solutions, it is desirable that a functionally effective amount of a viscosity reducing agent be employed in the aqueous admixture. Suitable agents are those liquids which are known to be substantially miscible with water. It is also advantageous that such liquids have minimal reactivity with the other components of the admixture and concrete. Examples of such agents are the alcohols and alcohol derivatives, such as methanol, ethanol, isopropyl alcohol, triethanolamine, and propylene glycol. A functionally effective amount of the viscosity reducing agent is an amount sufficient to reduce the viscosity of the aqueous admixture itself to render it a more workable liquid. Such amount can vary and typically ranges from about 1 to about 5 weight percent, preferably from about 1.9 to about 4 weight percent based on weight of aqueous admixture; although any amount sufficient to impart the desired viscosity to the admixture can be employed.

The aqueous admixture of this invention can be prepared in any manner, as long as upon addition to a concrete mixture, the components can be substantially uniformly dispersed throughout. The admixture can be in any liquid form. For example, the components of the admixture can form a true solution in which the individual components of the admixture are substantially homogeneously dispersed throughout the liquid phase. Colloidal and micellar solutions are also suitable. The admixture can likewise be a mixture of two or more miscible liquids. Two or more immiscible phases are suitable as long as the phases are substantially stable for the period of time required for the addition to and dispersion throughout the concrete mixture. Aqueous dispersions and emulsions are also suitable.

As used herein, the expressions "effective fluidity", "effectively fluid", and "effectively applied" refer to the fluid-like properties exhibited by the concrete mixture during preparation and application. An effectively fluid concrete mixture, for example, is a concrete mixture which can be readily agitated to sufficiently wet all of the components of the mixture, and which can be readily workable to be effectively applied. An effectively applicable concrete mixture, for example, can be readily applied and can substantially adhere to the desired surface or structure. Such properties can be measured, for example, by the slump test, as defined in ASTM C-143. In such a test, a concrete mixture is prepared and placed in the frustum of a cone. After a period of time, the cone is removed, and the distance that the concrete mixture drops is measured. The test is repeated at regular intervals. A fluid concrete mixture drops after longer periods a distance close to the distance it dropped in the initial test. When preparing a concrete mixture by the process of this invention, and comparing its slump test results against a concrete mixture of the same composition, but without the incorporation of the water-soluble polymer composition, the concrete mixture of this invention retains its slump over time better. That is, compared with the amount of initial slump, the concrete mixtures of this invention can slump closer to the initial slump amount than do other concrete mixtures. Therefore, the concrete mixtures of this invention have an extended time of effective fluidity. For example, the improved concrete mixtures can slump closer to their initial slump compared with other concrete mixtures after 20 minutes, preferably after 30 minutes, more preferably after 40 minutes, and most preferably after 60 minutes when tested according to ASTM C-143.

To practice the improved process of this invention, the amounts of the cementitious binding agent, the filler material, and the coarse aggregate material are combined to provide a solids, and preferably a substantially dry solids, mixture. By "substantially dry" is meant that no water, except for the moisture associated with the components under conditions of ordinary storage and application, is added during the mixing of these components. The water-soluble polymer composition can be incorporated into the solids mixture in any manner which can substantially uniformly disperse the water-soluble polymer throughout the solids mixture. Preferably, the water-soluble polymer composition is a substantially dry powder, and is first intimately mixed with the cementitious binding agent. This mixture can then be combined with the filler and coarse aggregate materials. A functionally effective amount of the water-reducing agent and water are then admixed with the solids-polymer mixture. Typically the water-reducing agent is in a liquid form; therefore, the water-reducing agent and water can be added simultaneously, as a liquid mixture, or in sequence with either the water or the water-reducing agent added first. Preferably, the water-reducing agent and water are added simultaneously, although, adding the water first, followed by the addition of water-reducing agent is also acceptable. The components are mixed until a concrete mixture having the desired effective fluidity is provided. The concrete mixture can then be employed in its intended application.

The aqueous admixture of this invention is useful in preparing concrete mixtures with an extended time of effective fluidity. Such concrete mixtures can be prepared by conventional methods with the aqueous admixture added therein. Typically, the amounts of cementitious binding agent, fine aggregate, and coarse aggregate are combined to provide a solids mixture, preferably a substantially dry solids mixture. The solids mixture is contacted, under agitation conditions, with a functionally effective amount of the aqueous admixture and, optionally, an additional amount of water to provide an effectively fluid concrete mixture. The manner of addition of the aqueous admixture to the solids mixture is not critical as long as all the components can be substantially uniformly dispersed throughout the solids mixture. The aqueous admixture and amount of mix water can be added simultaneously, or sequentially with either the admixture or mix water added initially. Within the simultaneous addition embodiment is a method of addition wherein some of the functional components; e.g., the water-reducing agent, water-soluble polymer, or anti-foaming agent, are added individually or separately to the mix water. Also, in the simultaneous addition embodiment, the amount of mix water can comprise the aqueous admixture of the invention. Preferably, the functional components, the water-reducing agent, water-soluble polymer and optional components, are combined initially to provide the aqueous admixture, and then the prepared aqueous admixture is added to the mix water. This method of addition can substantially simultaneously disperse all of the functional components of the admixture uniformly throughout the concrete mixture. The amount of the aqueous admixture added to the concrete mixture can vary and typically ranges from about 0.01 to about 0.1 and preferably from about 0.03 to about 0.07 parts per part of cementitious binding agent, although any effective amount is sufficient.

Other compositions can be added in functionally effective amounts as needed. For example, air-entraining agents can be added to the concrete mixture to entrain air. Also, antifoaming agents, such as polysiloxanes and the like can be added to inhibit the formation of air bubbles during agitation of the concrete mixture. Such optional components, their method of addition and amounts are well known to those skilled in the art, and are not critical to the practice of this invention.

33,297A-F                    -15-

The following examples are intended to illustrate only, and not limit the scope of the invention.

Example 1

A concrete mixture is prepared as follows: A substantially dry intimate mixture of about 11 kilograms portland Type I cement and about 1.63 grams of a hydroxypropyl methylcellulose having a hydroxypropoxyl molar substitution from about 0.1 to about 0.35, and a methoxyl degree of substitution from about 1.1 to about 2, and a viscosity of about 4000 centipoises measured at 25°C as a 2 percent solution is provided. This mixture is intimately mixed in the substantially dry form with about 23 kg of sand acceptable under ASTM C-33, and about 23 kg of gravel comprising a major amount of particles greater than about three-eighths inch (0.9 cm) in diameter. About 3.5 g of an air--entraining agent, sold as Grace AEA® by the W.R. Grace Co., is added to provide an air content of 5.5 percent in the final concrete mixture. To this substantially homogeneous substantially dry mixture is added about 219 g of a condensed sulfonated naphthalene formaldehyde liquid water-reducing agent known as ICI Mighty 150®, available from the ICI America Co., and about 4.4 kg of water.

The liquid components are substantially mixed with the substantially dry components to provide an effectively fluid concrete mixture. The concrete mixture is subjected to ASTM C-143 slump test, and its slump is measured at ten minute intervals over a ninety minute time period. The results are compiled and provided in Table I under column Sample 1.

## Comparative A

A concrete mixture is prepared by mixing together in a substantially dry state about 11 kilograms of portland Type I cement, about 23 kg of sand acceptable under ASTM C-33, and about 23 kg of gravel comprising particles greater than three-eighths inch (0.9 cm) in diameter. About 10 g of an air-entraining agent, sold as Grace AEA® by the W.R. Grace Co., is added to provide an air content of about 5 percent in the final concrete mixture. To this substantially homogeneous and dry mixture is added about 219 g of a condensed sulfonated naphthalene formaldehyde liquid water-reducing agent known as ICI Mighty 150® available from the ICI America, Co., and about 4.4 kg of water. The components are mixed to provide an effectively fluid concrete mixture, and the mixture is subjected to a slump test, according to ASTM C-143. Its slump is measured at ten minute intervals over a ninety minute period. The results are compiled and provided in Table I under column Comparative A*.

## TABLE I

### Slump

| Time (Min) | Sample 1 Inches (cm) | | Comparative A[*] Inches (cm) | |
|---|---|---|---|---|
| 10 | 7.2 | (18.3) | 7.2 | (18.3) |
| 20 | 7.2 | (18.3) | 6.0 | (15.2) |
| 30 | 6.7 | (17.0) | 4.2 | (10.7) |
| 40 | 6.0 | (15.2) | 2.7 | (6.8) |
| 50 | 5.5 | (14.0) | 2.5 | (6.4) |
| 60 | 5.0 | (12.7) | 1.7 | (4.3) |
| 70 | 4.2 | (10.7) | 1.5 | (3.8) |
| 80 | 3.5 | (8.9) | 0.5 | (1.3) |
| 90 | 3.5 | (8.9) | 0.5 | (1.3) |

*Not an example of the invention

The data in Table I illustrate that the concrete mixture prepared according to this invention (Sample 1) retains its slump after twenty minutes, better than concrete mixtures (Comparative A[*]) of the same composition, but which do not incorporate the water-soluble polymer composition (hydroxypropyl methylcellulose) in its preparation.

Example 2

Liquid admixture "A" is prepared by combining together 1.65 g of a hydroxypropyl methylcellulose having a hydroxypropoxyl molar substitution from about 0.1 to about 0.35, and a methoxyl degree of substitution from about 1.1 to about 2, and a viscosity of about 4000 centipoises measured at 20°C as a 2 percent solution, sold as Methocel® K4MS by The Dow Chemical Company, 163 g of distilled water, 219.5 g of a sulfonated naphthalene formaldehyde condensate water-reducing agent sold as ICI Mighty 150® by ICI America Company, and 2 g of a silicone polydimethyl siloxane anti-foaming agent sold as H-10 Antifoam® by The Dow Corning Company. The liquid admixture is a dark-brown thick syrup-like mixture.

Liquid admixture "B" includes a viscosity reducer and is prepared by combining 1.65 g of a hydroxypropyl methylcellulose having a hydroxypropoxyl molar substitution from about 0.1 to about 0.35, and a methoxyl degree of substitution from about 1.1 to about 2, and a viscosity of about 4000 centipoises measured at 20°C as a 2 percent solution sold as Methocel® K4MS by The Dow Chemical Company, 163 g of distilled water, 219.5 g of a sulfonated naphthalene formaldehyde condensate sold as ICI Mighty 150® by ICI America Company, and 5 g of a silicone poly-dimethylsiloxane antifoaming agent sold as H-10 Antifoam by The Dow Corning Company, and 15.4 g of isopropyl alcohol. The liquid admixture is noticeably less viscous than liquid admixture "A".

A concrete mixture, Sample 2, is prepared by mixing together in the substantially dry state about 11 kg of portland Type I cement, about 23 kg of sand acceptable under ASTM C-33, about 23 kg of gravel comprising particles greater than about three-eighths inch (0.9 cm) in diameter. About 385.2 g of liquid admixture "A" is added to about 4.4 kg of mix water, and this liquid mixture is stirred into the substantially dry solids mixture of cement, sand, and gravel to provide an effectively fluid concrete mixture.

The concrete mixture is subjected to a slump test according to ASTM C-143, and its slump is measured at ten-minute intervals over a ninety-minute time period. The results are compiled and provided in Table II under column Sample 2.

A second concrete mixture, Sample 3, is prepared as above and 403.7 g of liquid admixture "B" is added in the same manner as in Sample 2. The concrete mixture is subjected to the slump test. The results are provided in Table II under column Sample 3.

Comparitive B

A concrete mixture is prepared by mixing together in a substantially dry state about 11 kg of portland Type I cement, about 23 kg of sand acceptable under ASTM C-33, and about 23 kg of gravel comprising particles greater than three-eigths inch (0.9 cm) in diameter. To this substantially homogeneous and dry mixture is added about 98 g of a liquid water-reducing agent known as ICI Mighty 150[®], available from ICI America Company, about 4.25 g of an air-entraining agent sold as Grace Air Entraining Agent by the W. R. Grace Company, and about 4.5 kg of water. The components are mixed until an effective concrete mixture is provided. The mixture is subjected to a slump test according to ASTM C-143 and its slump is measured at ten-minute intervals over a ninety-minute period. The results are compiled and provided in Table II under column Comparative B[*].

0200471

## Table II

### Slump

| Time (Minutes) | Sample 2 (With liquid Admixture A) Inches (cm) | | Sample 3 (With Liquid Admixture B) Inches (cm) | | Comparative B[*] Inches (cm) | |
|---|---|---|---|---|---|---|
| 10 | 7.5 | (19.1) | 6.5 | (16.5) | 7.2 | (18.3) |
| 20 | 7.7 | (19.6) | 7.2 | (18.3) | 6.0 | (15.2) |
| 30 | 7.7 | (19.6) | 7.5 | (19.1) | 4.2 | (10.7) |
| 40 | 7.7 | (19.6) | 7.5 | (19.1) | 2.7 | (6.8) |
| 50 | 7.7 | (19.6) | 8.0 | (20.3) | 2.5 | (6.4) |
| 60 | 8.0 | (20.3) | 8.5 | (21.6) | 1.7 | (4.3) |
| 70 | 7.7 | (19.6) | 8.0 | (20.3) | 1.5 | (3.8) |
| 80 | 7.7 | (19.6) | 8.2 | (20.8) | 0.5 | (1.3) |
| 90 | 7.2 | (18.3) | 8.0 | (20.3) | 0.5 | (1.3) |

[*]Not an example of the invention.

The data in Table II illustrate that the concrete mixtures prepared employing the liquid admixtures of this invention (Sample 2 and Sample 3) retain

33,297A-F                    -21-

their effective fluidity better after twenty minutes, than a concrete mixture which is not prepared by adding the admixture of this invention.

## CLAIMS

1. An aqueous admixture composition suitable for preparing effectively fluid concrete mixtures, said admixture composition comprising

    (a) a water-reducing agent,

    (b) a water-soluble polymer composition, and

    (c) water.

2. A composition as claimed in Claim 1, further comprising

    (d) an anti-foaming agent.

3. A composition as claimed in Claim 1 or 2, further comprising a viscosity reducing agent.

4. A composition as claimed in any one of the preceding claims, wherein said viscosity reducing agent is an alcohol or alcohol derivative.

5. A composition as claimed in Claim 4, wherein said viscosity reducing agent is isopropyl alcohol or triethanolamine.

6. A composition as claimed in any one of the preceding claims, wherein said water-soluble polymer composition is a water-soluble cellulose ether.

7. A composition as claimed in Claim 6, wherein said cellulose ether is a hydroxypropyl methylcellulose.

8. A composition as claimed in any one of preceding claims, wherein said water-reducing agent is a sulfonated naphthalene formaldehyde condensate, and said anti-foaming agent is a silicone polydimethyl siloxane.

9. A composition as claimed in any one of the preceding claims, comprising from about 20 to about 60 weight per cent of the said water-reducing agent, from about 0.1 to about 0.7 weight per cent water-soluble polymer composition of the said, from about 0.1 to about 5 weight per cent of the said anti-foaming agent specified in Claim 2 from about 40 to about 80 weight per cent water, present from about 1 to about 5 weight per cent of the viscosity reducing agent specified in Claim 3 the percentages being based on total weight of the admixture.

10. A composition as claimed in any one of the preceding claims, wherein said cellulose ether is temporarily crosslinked with a dialdehyde.

11. A composition as claimed in Claim 10, wherein said dialdehyde is glyoxal.

12. A composition as claimed in Claim 11, further comprising an amount of a hydroxide sufficient to reverse the crosslinking of said cellulose ether.

13. A composition as claimed in Claim 12, wherein said hydroxide is ammonium hydroxide.

14. A process for preparing an effectively fluid concrete mixture, which process comprises contacting a composition as claimed in any one of the preceding claims with a cementitious binding agent and an aggregate composition.

15. A process as claimed in Claim 14, further comprising incorporating an additional amount of water sufficient to provide an effectively fluid concrete mixture.

16. A process for preparing a concrete mixture comprising providing a mixture comprising an aggregate composition, a cementitious binding agent, a water-reducing agent, water, and a water-soluble polymer, the said water-soluble polymer being present in an amount sufficient to give the resulting concrete mixture an extended time of fluidity as compared with a concrete mixture of the same composition prepared without the incorporation of the water-soluble polymer.

17. A process as claimed in Claim 16, wherein said water-soluble polymer composition is a water-soluble cellulose ether.

18. A process as claimed in Claim 17, wherein said cellulose ether is a hydroxypropyl methylcellulose ether.

19. A process as claimed in Claim 16, comprising forming a solid mixture of a coarse aggregate, a fine aggregate, and the cementitious binder, and subsequently adding thereto the water-reducing agent and water.

20. A process as claimed in Claim 19 wherein the water-soluble polymer is added to the solids mixture prior to the incorporation of the water.

21. A process as claimed in Claim 20, wherein said cementitious binding agent is portland cement, said fine aggregate is sand acceptable under ASTM C-33, and said coarse aggregate is gravel having a majority of particles having a larger diameter than the fine aggregate.

22. A process as claimed in Claim 20 or Claim 21, wherein the water-soluble polymer composition is a substantially dry powder and is intimately mixed with the cementitious binding agent, and said intimate mixture is then mixed with the fine aggregate and coarse aggregate.

23. A process as claimed in any one of Claims 16 to 22, wherein said water-reducing agent reduces the amount of water required in preparing an effectively fluid concrete mixture by at least about 12 per cent compared to the water required in preparing an equally effectively fluid concrete mixture without the addition of said water-reducing agent.

24. A process as claimed in any one of Claims 16 to 23, wherein about 1 weight part of the said portland cement, from about 1.75 to about 3 parts by weight of said fine aggregate, from about 1.75 to about 3 parts by weight of said coarse aggregate, from about 0.3 to about 0.7 parts by weight of water, from about 0.3 to about 3 per cent by weight of said water-reducing agent, and from about 0.01 to about 0.1 weight per cent by weight of cementitious binding agent of said water-soluble polymer are employed.

25. A process as claimed in any one of Claims 16 to 24, wherein said water-reducing agent is sulfonated naphthalene formaldehyde condensate.

26. A concrete mixture prepared by a process as claimed in any one of Claims 14 to 25, wherein said mixture has a slump value closer to its initial slump value after twenty minutes compared to the corresponding slump value of a concrete mixture prepared without the incorporation of the water-soluble polymer composition, said slump values being measured according to ASTM C-143.